# EUROPEAN PATENT APPLICATION

(11) **EP 3 922 390 A1**
(43) Date of publication of application: **15.12.2021**
(21) Application number: 20179515.0
(22) Date of filing: 11.06.2020
(51) Int. Cl.: B23H 7/08, B23H 11/00, G05B 19/418, G06Q 50/04, B23H 7/02

(54) **MOBILE COMMUNICATION DEVICE FOR PROCESSING DATA ASSOCIATED WITH WIRE**

(71) Applicant: Agie Charmilles Services SA, 1217 Meyrin (CH)
(72) Inventor: Lavazais, Bertrand, 01170 Thoiry (FR)
(74) Representative: Fenner, Seraina

(57) **Abstract**

A mobile communication device (1) for processing data associated with wire used in electrical discharge machines comprising: a reader module (3) configured to enable communication with a RFID tag (11), which is mounted on a wire spool (10) and to read wire-specific data stored in the RFID tag (11); a storage module (5) configured to store the wire-specific data retrieved from the RFID tag (11); a processing unit (4) configured to process the wire-specific data upon a user inquiry in order to determine user-inquired data, which includes at least a part of the wire-specific data selected upon the user inquiry; and a mobile communication module configured to communicate the user-inquired data to an external device.

## Description

### FIELD OF THE INVENTION

The present invention is related to a mobile communication device for processing data associated with wire electrode used in electrical discharge machine.

### BACKGROUND OF THE INVENTION

Wire electrical discharge machining (EDM) is a well-known non-traditional machining process, which can provide high-precision machining, cut hard material and machine complex shape. Since the principle of the EDM is based on the electro discharge erosion effect occurring between the wire electrode and the workpiece, the wire electrode is of utmost important. However, in order to achieve a high production efficiency and precision and keep the production costs low selecting the proper wire electrode can be challenging. Before the machining, the proper wire electrode must be selected by considering, e.g. material of the wire electrode, the diameter of the wire electrode. In further, the machine parameters to be set for the machining depend on the type of the wire electrode. Therefore, it is essential for the machine operator to be able to access all the information associated with the wire electrode in a reliable manner.

US 2018/0257159 discloses a spark-erosion machining device comprising a wire spark-erosion machine and a spark-erosion wire packaged on a spool. An RFID tag is provided on the wire spool and includes identification data of the wire. A data reader device is arranged in the spark-erosion machine to read the identification data. This device allows that the identification data of the wire can be directly provided to the machine without manual input by the operator. However, the identification data is solely accessible through the spark-erosion machine.

### SUMMARY OF THE INVENTION

It is an objective of this invention to provide a device to allow a flexible access to the information related to the wire electrode, in particular, without communication with the EDM machine.

According to the present invention, these objectives are achieved through the features of independent claims. In addition, further advantageous embodiments follow from the dependent claims and the description.

In the present invention, a mobile communication device for processing data associated with wire electrode used in electrical discharge machines comprises a reader module, a storage module, a processing unit and a communication module. The reader module is configured to enable communication with a RFID tag mounted on a wire spool and to read wire-specific data stored in the RFID tag. The storage module is configured to store the wire-specific data retrieved from the RFID tag. The processing unit is configured to process the wire-specific data upon a user inquiry and to determine user-inquired data, which includes at least a part of the wire-specific data selected upon the user inquiry. The communication module is configured to communicate the user-inquired data to an external device.

This device allows to flexibly access to the information encrypted in the RFID tag mounted on the wire spool. In the prior art, the reader module is installed in the machine tool. The information stored in the RFID tag can only be obtained by the reader installed in the machine tool. If the user does not have the access to the machine, he cannot obtain the information from the RFID tag. This device makes it possible to directly access the wire-specific data without any communication with the machine tool. Further, the information can be accessed by the user, when the wire spool is not installed in the EDM machine. If the information can be retrieved before the wire spool is mounted into the machine, additional safety can be provided to install the correct wire spool in the machine.

The mobile communication device may be a mobile phone, laptop or tablet. This provides the advantage that the wire-specific data retrieved from the RFID tag can be first stored in the mobile communication device and processed later. This means, retrieving data and processing data can be separated timely and locally. Further, the information can be accessed during the production without interrupting the machining.

In one variant, the reader module may be a near field communication module installed in the mobile device. The near field communication module is configured to generate electromagnetic fields to read the tag.

The RFID tag can be an active tag, passive tag or a semi-active tag, in particular a NFC tag.

After reading the RFID tag, the content of RDIF tag is decoded by the processing module, e.g. to change the Hexadecimal data format of the data stored in the RFID tag into another data format, e.g. decimal data format. In further, a password may be required to decode the data retrieved from the RFID tag.

In one embodiment, processing unit is configured to represent the user-inquired data based on user inquiry. The user-inquired data may be directly sent to an external communication device or be represented in a specific format desired by the user and be sent to the external communication device in the specific format. In addition, the user-inquired data and/or the user-inquired data in the specific format may be presented on a display of the mobile communication device.

In a preferred variant, the storage module is configured to store a plurality of wire-specific data sets, each of the wire-specific data set includes the wire-specific data assigned to one wire spool. If the wire spool is stored in a storage, which is at the outside of the machine tool, the mobile communication device may retrieve the wire-specific data of all wire spools stored in the storage for logistic purpose. For example, the storage module is configured to store at least 30 wire-specific data sets.

The wire-specific data includes one or more of the following: information to identify the wire electrode, information related to manufacturer of the wire electrode, information of wire electrode parameter, information of wire electrode condition, information of wire electrode usage. Preferably, the wire-specific data includes wire reference, wire diameter, initial wire weight, current wire length, wire material, initial wire length, current wire length, manufacturing data.

In an embodiment, the user inquiry is one or more of the following: reading new wire-specific data, selecting one wire-specific data set stored in the storage module, generating quality report and generating inspection report. In the case of new wire-specific data is required, the user can select the first option of reading new wire-specific data. After selecting this option, the reader module is activated to retrieve the data from the RFID tag. The retrieved data is stored in the storage module. After this step, the user has the flexibility to determine if the retrieved data has to be processed immediately or in a later stage. For example, the user can retrieve wire-specific data of a plurality of wire spools on site and store the plurality of wire-specific data sets in the storage module and process later in another location. If the user requires the information for maintenances or identifying errors occurred during production, it is important to obtain the processed user-inquired data immediately at the same location on site. In this case, the user may select the option of processing data right after reading the data from RFID. Generating quality report or inspection reports are two of variants how the retrieved wire-specific data is processed. However, processing wire-specific data is not limited to these variants. In the case of maintenances or identifying errors, external experts can provide additional supports to the user if the processed data or generated reports can be sent to the experts. Therefore, the communication module is configured to receive the generated report and send the generated report via a wireless communication network to the external device such as a mobile device, an external sever.

In an advantageous variant, the processing unit is configured to generate a report presenting the wire-specific data, in particular, a quality claim report, an inspection report or a text file, in particular comma-separated values file. It is possible to present the wire-specific data and/or the generated reports on a display of the mobile communication device.

If the operator identifies an error during the machining caused by the wire, he can retrieve the wire-specific data of the wire mounted in the machine tool and select the option of generating quality report. The processing unit is configured to select a part of the retrieved wire-specific data, which is relevant for accessing the quality of the wire and to generate the quality report. In further the generated quality report can be sent to the external communication device through the communication module. The quality report may include one or more of the following information: supplier, material, manufacturing data, shelf life expiration data, spool format, initial spool weight, initial spool length, current spool length.

In another variant, the processing unit is configured to select a part of the wire-specific data and to generate a document based on the user inquiry. In particular, an inspection report may be generated. The inspection report may include the measurements made in the factory of the EDM wire producer to demonstrate that the performance of the wire are within specifications. The processing unit is configured to select a part of the retrieved wire-specific data, which is relevant for inspection tests and to generate the inspection report. The inspection report may include one or more of the following information: measured normalized diameter of the wire, measured maximum diameter of the wire, measured elongation, measured tensile strength, measured conductivity, measured straightness, measure ovality, measured linear mass density, measured initial spool weight, calculated initial spool length.

In a variant, the processing unit is configured to generate a text file, in particular, a common-separated values file.

It is possible that a password must be available to the reader module to decode the data stored in the RFID tag.

In a further embodiment, the processing unit is configured to combine the wire-specific data with the data stored in the storage module to generate the user-inquired data. The storage module may store data related to the electrical discharge machine, data related to machining condition, data related to a workpiece to be machined, data related to identification of users, visual data of the wire, data related to the environment where the wire spool is stored.

### BRIEF DESCRIPTION OF THE DRAWINGS

In order to describe the manner in which advantages and features of the disclosure can be obtained, in the following a more particular description of the principles briefly described above will be rendered by reference to specific embodiments thereof which are illustrated in the appended drawings. These drawings depict only exemplary embodiments of the disclosure and are not therefore to be considered to be limiting of its scope. The principles of the disclosure are described and explained with additional specificity and detail through the use of the accompanying drawings in which:
- Fig. 1: illustrates a schematic of a mobile communication device and a wire spool with RFID tag;
- Fig. 2: illustrates a schematic of the mobile communication device; and
- Fig.3, Fig.4 and Fig. 5: illustrates presenting the options on a display.

### EXEMPLARY EMBODIMENTS

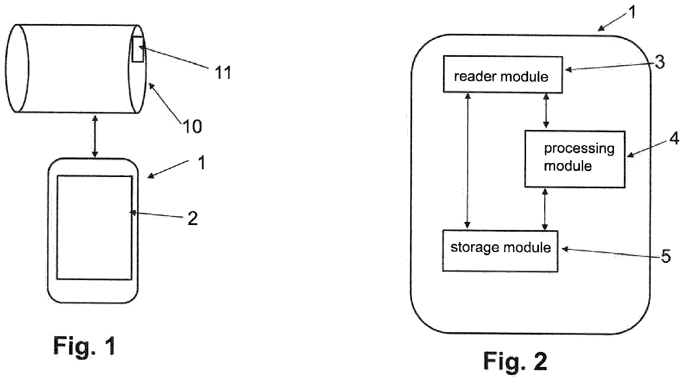

Figure 1 illustrates a mobile communication device 1 communicates with a RFID tag 11 arranged on a wire spool 10, in particular on the flange of the wire spool. A display 2 is provided on the mobile communication device.

As illustrated in figure 2, the mobile communication device comprises a reader module 3, a processing module 4 and a storage module 5. The reader module and the processing module can communicate directly with the storage module.

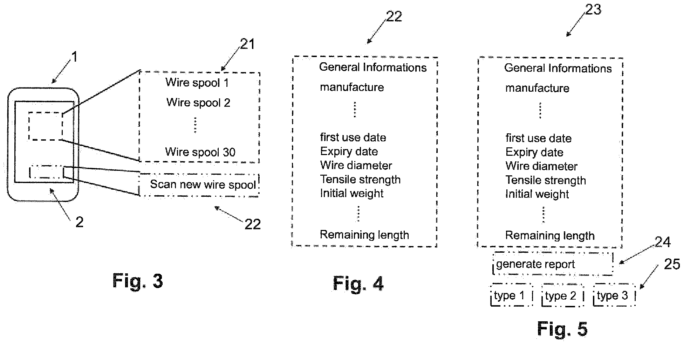

During the application, different options are provided and presented on the display. Figure 3 shows the options of selecting saved a plurality of wire-specific data sets 21 or scan wire-specific data of a new wire spool. If the latter option is activated, the processing module receives this inquiry and control the reader module to read the data from the RFID tag. If the first option is chosen, the corresponding data stored in the storage module is recalled by the processing unit and presented on the display as shown in figure 4.

Another option available is generate one or more reports, such as a quality report, inspection report and a text file. Different types of reports 25 can be selected directly from the display. If the user select one of report and activates the option of generate the report 24, the processing unit starts to process the wire-specific data and generate the report.

## Claims

1. A mobile communication device (1) for processing data associated with wire electrode used in electrical discharge machines comprising:
a reader module (3) configured to enable communication with a RFID tag (11), which is mounted on a wire spool (10), and to read wire-specific data stored in the RFID tag;
a storage module (5) configured to store the wire-specific data retrieved from the RFID tag;
a processing unit (4) configured to select a part of the wire-specific data upon a user inquiry in order to determine user-inquired data; and
a mobile communication module configured to communicate the user-inquired data to an external device.

2. The mobile communication device according to claim 1, wherein the processing unit is configured to display the user-inquired data, in particular the user-inquired data is in form of a document.

3. The mobile communication device according to claim 1 or 2, wherein the storage module (5) is configured to store a plurality of wire-specific data sets, each of the wire-specific data set includes the wire-specific data assigned to one wire spool.

4. The mobile communication device according to claim 3, wherein the storage module (5) is configured to store at least 30 wire-specific data sets.

5. The mobile communication device according to one of claims 1 to 4, wherein the user inquiry is one or more of the following: reading new wire-specific data, selecting one wire-specific data set stored in the storage module, generating quality report and generating inspection report.

6. The mobile communication device according to one of claims 1 to 5, wherein the communication module is configured to receive the generated report from the processing unit and send the generated report via a wireless communication network to the external device.

7. The mobile communication device according to one of claims 1 to 6, wherein the processing unit (4) is configured to present the wire-specific data, and/or generated reports on a display of the mobile communication device.

8. The mobile communication device according to one of claims 1 to 7, wherein the wire-specific data includes one or more of the following: information to identify the wire, information of manufacturer, information of wire parameter, information of wire condition, and information of wire usage.

9. The mobile communication device according to one of claims 1 to 8, wherein the wire-specific data includes one or more of the following: wire reference, wire diameter, initial wire weight, current wire length, wire material, initial wire length, current wire length, and manufacturing data.

10. The mobile communication device according to one of claims 1 to 9, wherein the reader module (3) is configured to require a password to decode the wire-specific data stored in the RFID tag, in particular to change the data format of the wire-specific data stored in the RFID tag.

11. The mobile communication device according to one of claims 1 to 10, wherein the processing unit is configured to combine the wire-specific data with the data stored in the storage module to generate the user-inquired data.

12. A method for processing data associated with wire of used in electrical discharge machines comprising:
a. communicating with a RFID tag (11) mounted on a wire spool (10) and reading the wire-specific data stored in the RFID tag by a reader module (3);
b. storing the wire-specific data retrieved from the RFID tag in a storage module (5);
c. selecting a part of the wire-specific data upon a user inquiry in order to generate user-inquired data; and
d. communicating the user-inquired data to an external device by a communication module.

13. A computer program product comprising a non-transitory computer readable medium having stored thereon computer program code which is configured to perform
a. communicating with a RFID tag mounted on a wire spool and reading the wire-specific data stored in the RFID tag by a reader module;
b. storing the wire-specific data retrieved from the RFID tag in a storage module;
c. selecting a part of wire-specific data upon a user inquiry in order to generate user-inquired data; and
d. communicating the user-inquired data to an external device by a communication module.
